Europäisches Patentamt

European Patent Office

Office européen des brevets

(11) Publication number: **0 246 062**
**A2**

## (12) EUROPEAN PATENT APPLICATION

(21) Application number: **87304199.0**

(22) Date of filing: **12.05.87**

(51) Int. Cl.⁴: **C 02 F 1/76**
**E 04 H 3/20**

(30) Priority: **12.05.86 AU 5852/86**

(43) Date of publication of application:
**19.11.87 Bulletin 87/47**

(84) Designated Contracting States: **ES FR GB GR IT**

(71) Applicant: **OUTDOOR INDUSTRIES LIMITED**
**Suite 5 100 Mill Point Road**
**South Perth 6151 (AU)**

(72) Inventor: **Neuwen, David Bernard**
**16 Vista Parade**
**Ballajura 6066 (AU)**

**Penglase, John Robert**
**23 Toorak Road**
**Rivervale 6103 (AU)**

(74) Representative: **Harrison, Michael Robert et al**
**Urquhart-Dykes & Lord 5th Floor Tower House Merrion Way**
**Leeds, LS2 8PA (GB)**

(54) Improvements in or relating to chlorination of water.

(57) A package and method for chlorinating a body of water such as a swimming pool, the package comprising a source of hypochlorite material which in use dissolves leaving a solid residue and a sachet containing the material, the sachet having at least one wall which is permeable to water and to chlorine , the permeability being such as in use to retain more than 50 wt % of the solid residue in the sachet. According to the method of use in a swimming pool the sachet is disposed in the skimmer box and the filter pump disperses the chlorine through the swimming pool. The hypochlorite material may contain a carbonate to release $CO_2$ when most of the chlorine has been released, a gelling agent to block th selectvely pores in the sachet to contain the $CO_2$ and a flocculating agent to agglomerate at least some of the solid residues.

## Description

The present invention relates to the chlorination of bodies of water such as swimming pools.

One mode of chlorinating swimming pools is to place calcium hypochlorite particles in water in a container such as a bucket.

The water containing the particulate calcium hypochlorite is agitated so that the calcium hypochlorite reacts with the water to release chlorine. The released chlorine is dissolved in the water leaving a slightly soluble solid residue of calcium hydroxide in suspension. Some sources of calcium hypochlorite may also contain impurities such as calcium carbonate, magnesium oxides and siliceous clays which if allowed into the body of water will, with the calcium hydroxide, tend to cause cloudiness in the water and to form deposits on, for example, the swimming pool walls. In addition, if the calcium hydroxide enters the body of water it may react with dissolved carbon dioxide in the water at high pH to form further calcium carbonate deposits and will react at localised basic sites such as scum, algae and bacteria on the containing walls to form the deposits.

It is therefore important to separate out the residue and this is done by allowing the suspended material to settle following which the supernatant water containing dissolved chlorine is decanted into the body of water. Most preferably, the supernatant water is also filtered.

This procedure is both time consuming and onerous and tends to result in substantial wastage of available chlorine, because it provides a short term excess of chlorine in the body of water near the surface of the water. The excess chlorine may be lost to atmosphere or may react in sunlight to form chloride radicals which tend to react with positive radicals in the water to form more stable compounds which do not assist in chlorinating the water. This causes a longer term deficiency of chlorine. Furthermore, the described method may be hazardous because of the risk of spillage of the concentrated supernatant water, because it exposes an operator to dust containing toxic chlorine compounds and because the hypochlorite presents a substantial fire risk.

Notwithstanding the deficiencies of the hypochlorite method, the material is relatively cheap and it would be desirable to facilitate its use by alleviating the deficiencies.

Totally dissolvable sources of chlorine are available and have found increased attractiveness to swimming pool owners because of their ease of use. These materials can be dissolved completely in the swimming pool and include, for example, chloroisocyanuric acids and salts. Such materials are considerably more expensive than the hypochlorites but are particularly useful as they can be formed into blocks, tablets, particles and powders with preselected degrees of solubility dependent upon the desired interval of release of the active ingredient into the water.

With all chlorinating agents it is desirable to initially superchlorinate the water by providing a short term excess of chlorine at about 2 to 3 or more parts per million to immediately disinfect the water followed by a continued chlorination at a lower level of preferably I to I.5 parts per million to maintain the status. This has not been achieved with the hypochlorite systems because the solubility has not been controlled and, as described above, the immediate excess of chlorine provided by tipping the solution into the pool, for example at least 5 parts per million and possibly considerably more, causes loss of free chlorine resulting in a long term deficiency. With totally dissolvable chlorinating agents such as the dichloroisocyanurates, two or more tablets or blocks having different solubilites may be used to provide the desired short term excess and the continued action.

Like the hypochlorites, the totally soluble chlorinating agents are hazardous to use and in concentrated form may produce burns in contact with skin. In order to alleviate this risk it has been proposed to contain chlorinating agents such as those that are totally soluble in a porous pouch which is disposed in the water and from which the chlorine is released. Thus, French patent specification 2440919 proposes placing fast dissolving di- or tri-chlorocyanurate powder, granules or pastilles and slow dissolving tri-chlorocyanurate tablets or blocks in a pouch formed of porous material while U.S. Patent specification 4340491 proposes the introduction of trichloroisocyanuric acid, sodium dichloroisocyanurate, potassium dichloroisocyanurates, monopotassium dichloroisocyanurate and/or mixtures thereof into a sealed pouch of cold water insoluble polyvinyl alcohol which swells in water and permits the dissolved chlorine active ingredient to diffuse across the wall of the pouch.

We have now found that it is considerably more advantageous to dispose a solid hypochlorite chlorinating agent in a porous container since this may permit the dissolved chlorine to disperse in the body of water while retaining a majority of the solid residue in the container. Thus cloudiness in the pool is minimised while the likelihood of calcium carbonate deposits forming directly as a result of the chlorinating agent is substantially reduced. In addition the container facilitates handling of the hypochlorite material and enables correct quantities of the material to be used while alleviating the wastage of excess chlorine by providing a continuous dispersion of the chlorine through the water.

According to the present invention there is provided a package for use in chlorinating a body of water comprising a substantially closed sachet having at least one wall which in use of the package is permeable to water and to chlorine, and a solid source of hypochlorite material in the sachet which dissolves in water to release chlorine and a solid residue, the permeability of the at least one wall being such as in use to retain more than 50% of the solid residue in the sachet.

Further according to the present invention there is provided a method of chlorinating a body of water which comprises providing in a sachet a solid source of hypochlorite material which dissolves in water to release chlorine and a solid residue, disposing the sachet in an enclosure containing a constrained volume of water which is in communication with the body of water and with means for displacing the contrained volume into the body of water, the sachet in the constrained volume having at least one wall which is permeable to water and to chlorine with the permeability being such as to retain more than 50% of the solid residue in the sachet, and activating the displacing means.

Using the method of the invention ensures that chlorine is released promptly into the body of water due to the circulation of non-chlorinated water past and through the sachet. Because of the circulating water, superchlorinating levels may be achieved in the body of water without substantial excess chlorine and therefore with a considerably reduced loss of free chlorine, for example from 9 to 12% less, so that the chlorine introduced to the body of water remains active over a longer period. The method of the invention will still produce an initial excess of chlorine due to the concentrated volume of hypochlorite in the sachet but, by virtue of the controlled release provided by the sachet, this may be kept at a maximum of, for example, 3 parts per million, in the body of water.

Advantageously, the enclosure in which the sachet is disposed in use is a skimmer box of a swimming pool through which water from the pool is circulated to a filter and back to the pool.

The minimum flow of water through the sachet is not important since the chlorine will diffuse through at least one wall even under conditions of negligible flow and if necessary the chlorine may be dispersed in the body of water by separate means. However the maximum flow through the bag is preferably such that a majority of the residual solids in the sachet are permitted to settle in the sachet. This maximum flow is as much a function of the restriction on flow imposed by the at least one wall as of the flow of water around the sachet. Normal flows of water through a swimming pool skimmer box may be expected to be in the range of 100 to 700 litres per minute, but most of this would flow around the sachet. Maximum flow through the sachet in swimming pool use is very difficult to measure but is believed to be less than 3 litres per minute and almost certainly less than 1 litre per minute.

The porosity of the at least one wall is preferably in the range 1 to 10%, most preferably about 5%. The size of the pores will generally range between 1 micron and 1000 microns and the number of pores may vary accordingly. Thus one embodiment may have between 700 and 750 pores per square centimeter having an average diameter of 0.09 mm while a preferred embodiment has between 20 and 25 pores per square centimeter having an average diameter of 0.5 mm. The degree of water permeability is a function of the total pore area but will also depend upon the resistance to flow imposed by the at least one wall and the contents of the sachet.

It may be desirable to provide relatively large openings through the at least one wall yet restrict flow of water therethrough to a substantial degree. This may be achieved by forming the at least one wall from two or more separate layers. There will be a pressure drop between the inside of the sachet containing the hypochlorite material and the space between the adjacent two layers and solid residue which does pass through the inner layer may be deposited in said space. Conveniently the pores in the or each pair of adjacent layers are misaligned and the number, size and spacing of the pores in each layer may differ. The pore sizes and/or porosity in each layer may be greater than with only one layer.

If desired, increased flow through the sachet may be provided by forming a second wall thereof of porous material and said second wall may also have two or more layers. The preferred sachet is formed of two walls bonded together by bonding agent, heat sealing or other appropriate means with each wall having two layers of porous material.

The sachet may be formed of appropriate flexible plastics material which is resistant to the aggressive solutions encountered in use. Such materials include polyvinyl acetate, polyvinyl chloride, polypropylene, polyethylene and polyurethane The preferred material is a biaxially oriented polypropylene having a thickness of 20 microns and sold by W.R. Grace Limited in the United Kingdom under the Trade Mark MICRO-PERF.

The pores through the at least one wall may be formed by any appropriate means, and for example, the sachet may be pierced immediately prior to use by a suitable piercing means so that the sachet is sealed until use. More preferably, the pores are preformed in the material of the at least one wall by means of a multitude of miniature gas jets piercing the material with the desired size and array of pores. The jets melt the material to form the pores and the material as it cools forms a bead around each pore which reinforces the material.

The pores may be sealed until use of the sachet, for example by a peel-off layer or a layer which dissolves in water. Alternatively the pores may be defined by expansion of the material in water.

The preferred size of package provides sufficient chlorine when used in accordance with the invention for a small pool, for example 20,000 l, for one day. Generally 40 to 80 g of hypochlorite are required per 10,000 l per day. Thus in one preferred embodiment, the packages contain 80 g of hypochlorite material and one or two packages would be required for a 20000 litre pool. The preferred sachet has a dimension of 90 mm by 90 mm.

The preferred solid hypochlorite material comprises calcium hypochlorite. Calcium hypochlorite supplied from the United States of America and Japan is relatively pure and solid deposits on dissolving in water will comprise primarily calcium hydroxide. However these sources are considerably more expensive than calcium hypochlorite derived from China which may contain less available chlorine and more impurities.

We have found that the hypochlorite material in the sachet may advantageously include a material which produces carbon dioxide in acid medium, particularly a carbonate. The preferred such material is calcium carbonate. As chlorine is released by the dissolved hypochlorite material the pH reduces until at neutral pH in the sachet upto approximately 90 wt % of the available chlorine has passed into the body of water. As soon as the medium in the sachet becomes acidic, carbon dioxide will begin to be released by the carbonate and the sachet will inflate, with the internal pressure reducing the flow of water through the sachet. If sufficient carbon dioxide is released the sachet can float to the surface. We have found that by the time the sachet has floated to the surface, which may be as little as five minutes after the beginning of carbon dioxide product, the maximum chlorine content of the sachet may be about 5 wt %. Thus the release of carbon dioxide and/or the floating of the sachet to the surface may signify that the chlorine content of the package has been substantially used up. The preferred amount of carbonate content in the hypochlorite material is 0.1 to 5 wt %, most preferably 0.2 to 0.3 wt %.

The hypochlorite material in the sachet may advantageously also include a material which can form a gelatinous precipitate in water. One such material is magnesium oxide which can react in water to form the insoluble magnesium hydroxide gel. The gelatinous precipitate forms a coating on the inside of the sachet walls which tends to block the pores and thereby facilitate the action of the released carbon dioxide in floating the sachet to the surface. Accordingly, a smaller volume or a slower release rate of carbon dioxide may be appropriate. It is desirable that the pores are not blocked too early nor that too much carbon dioxide is produced since the sachet may otherwise explode, releasing the contents into the body of water. Preferably, the pores begin to block when the pH of the medium in the sachet reaches 6.0 to 6.5

It is of note that although the package containing hypochlorite material including a carbon dioxide producing agent and a gelatinous precipitate forming agent may be only at a depth of 250 mm in use, the inflated sachet which floats to the surface may remain afloat by virtue of the expansion of the carbon dioxide within the sachet due to the increase in temperature at the surface. Any chlorine remaining in the floating sachet may leach out under osmotic pressure over a period of time of, for example, one hour. The floating sachet may serve as a reminder that the chlorinating action of the package has been completed. The preferred amount of magnesium oxide in the hypochloride material is 0.5 to 3.5 wt %, most preferably 1 to 2 wt %.

It has also been found to be advantageous to include a flocculating agent with the hypochlorite material in the sachet to bind the residual solids together after the hypochlorite has dissolved. This not only means that the pores in the at least one wall may be larger than otherwise but also that the flow through the sachet may be increased since the flocculating action effectively increases the bulk of the residual solids agglomerates so that they are more likely to settle in the sachet. One example of an appropriate flocculating agent is clay, most advantageously a siliceous clay.

One aspect of including clay, particularly a siliceous clay, in the hypochlorite material with the gelatinous precipitate forming material is that the clay may delay the action of the precipitate in blocking the pores. Thus the clay provides temporary porosity to the gelatinous precipitate.

The preferred amount of clay in the hypochlorite material is 1 to 10 wt %, most preferably 3 to 5 wt %, and if both clay and magnesium oxide are present they are preferably in the ratio 2 to 3 : 1.

Calcium hypochlorite sourced from Shanghai Province, China has been found to include calcium carbonate, magnesium oxide and siliceous clay in the desired proportions and may be used as a natural product in the package of the present invention. It may include other impurities such as calcium oxide, sodium chlorite and/or sodium chlorate. Alternatively, desired additions may be made to a hypochlorite source material.

Embodiments of the present invention will now be described by way of example with reference to the accompanying drawings, in which:

FIGURE 1 is a graph illustrating the drop off in chlorine concentration when an excess is introduced to a body of water; and

FIGURE 2 is a graph similar to Figure 1 but showing chlorine retention when the chlorine is dispersed through the body of water;

The present invention was tested using three sachets formed of double-layer biaxially-oriented polypropylene. The overall size of each sachet is 90 mm × 90 mm and the layers are bonded by heat sealing along their edges so as to substantially seal the sachet. Each layer has a thickness of 20 microns and has an array of holes therethrough over the whole surface which are from 0.4 to 0.6 mm (average 0 5 mm) in diameter and are equally spaced at about 22 per square centimetre. This arrangeement gives each layer a porosity of about 5.7% (area of pores as a percentage of the overall area). The pores are formed by means of a series of gas jets locally melting the film to form the pores with the film material forming a head around each pore as it solidifies.

The two layers in each wall of the sachet are both provided with pores and the pores in each wall do not overlap to any substantial degree. This is performed by shifting one layer relative to the other so as to phase the equally spaced pores in each of the two layers. The layers have been found to wrinkle and stretch relative to each other in use so that overlap of more of the pores may occur but this has not been found to be seriously detrimental to retaining solid residue in the sachet. If the two layers in each wall move into contact, surface tension between them may also assist in retaining the solid residue.

83 g of calcium hypochlorite material sourced from Shanghai Province, China is disposed in the sachet. The material is in granular form and chemical analysis reveals that it comprises principally calcium hypochlorite but also 0.2 to 0.3 wt % calcium carbonate, 1 to 2 wt % magnesium oxide and 3 to 5 wt % siliceous clay as well as other minor impurities including calcium oxide, sodium chlorite, sodium chlorate and bio-organic debris. Iodine testing reveals that the material has upto 70 wt % available chlorine.

Three such bags were disposed in a skimmer box of a 30,000 to 40,000 litre swimming pool at a depth of 250 mm below the surface of the water in the skimmer box. The flow through the skimmer box was calculated at 300 to 500 litres per minute with the pump on.

Figures I and 2 show the concentration of chlorine measured in the swimming pool at a location 50 cm from the inlet to the skimmer box, with the pump off and on respectively.

As may be seen in the case of Figure I, chlorine is released by the dissolved calcium hypochlorite in the sachets very quickly directly into the swimming pool, locally reaching the desirable level of I.5 ppm (parts per million) within twenty minutes. The level climbs to a peak of slightly over 4 ppm within I.5 hours effectively providing superchlorination of the pool water. However the preferred maximum superchlorination level is about 3 ppm and the excess chlorine is quickly lost to atmosphere and free radicals so that the chlorine concentration has dropped to the desired level for continued chlorination of I.5 ppm after just over 3.5 hours. From about this time the drop off in chlorine concentration is exponential and at 7 hours the concentration is negligible.

The arrangement described with reference to Figure I is not satisfactory since the pool requires re-chlorinating after 3.5 hours, but may be improved by ensuring that the chlorine introduced to the pool is circulated so as to minimise local excess concentrations. This may be done by locating the sachets out of the skimmer box but in a moving flow of water. Furthermore, the sachets have provided the major advantage of retaining at least the majority of the residual solids from the calcium hypochlorite material as well as having improved the handling characteristics and given a clear indication of when the chlorine content of the sachet is substantially used up.

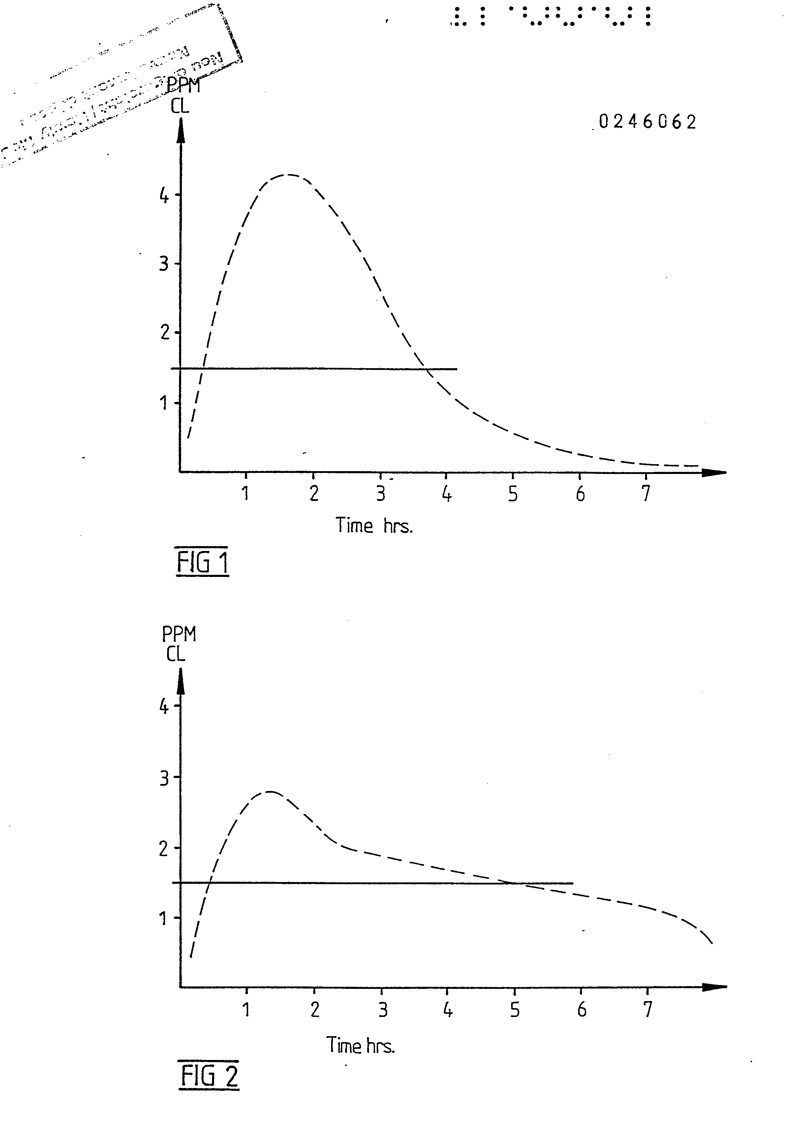

Improved chlorination of the swimming pool is performed with the filter pump on to disperse the dissolved chlorine from the sachets in the skimmer box, as shown in Figure 2. The flow through the skimmer box is in the range of 300 to 500 litres per minute and takes the chlorine through the filter and pump before returning the chlorinated water to the pool via a remote outlet. Thus, measuring the chlorine content of the pool 50 cm from the skimmer box inlet gives a reliable indication of the overall pool concentration The pump was turned off after I hour.

Figure 2 shows the concentration of chlorine increasing from a very low level to the desired long term level of I.5 ppm within 0.5 hours and to a maximum of 2.75 ppm within I.25 hours. This maximum is an optimum for initial chlorination without substantial excess chlorine being lost to reduce the long term effect. The chlorine concentration drops to 2 ppm within 2.5 hours but the rate of drop off then slows substantially so that the optimum I.5 ppm concentration is reached only after 5 hours. The concentration continues to drop slowly till 7.5 hours (I ppm) following which the rate of decrease increases.

It may thus be seen that the three sachets have provided optimum initial and long term concentrations and under normal conditions of use need only be replaced once a day.

The rate of release of chlorine from the sachet is dependent upon many factors including the temperature and the flow past the bag. With the pump off in the aforementioned arrangement 63 wt % of the available chlorine may be released within I.5 to 2 hours while 98 wt % may be released after 5 to I0 hours. With the pump on 80 wt % of the available chlorine may be released within 0.5 to I.5 hours while only 5 wt % may remain after I.0 to 5 hours, normally I to 2.5 hours. The rate of release is not overly important provided sufficient chlorine is released initially to superchlorinate the water without an excess being lost to the detriment of long term chlorination.

As the chlorine is released the pH within the sachet drops and as soon as it falls below 7.0 carbon dioxide is released by the calcium carbonate. We have found that the sachet begins to inflate when the pH reaches 6.5 due to the level of $CO_2$ released although this may depend upon the concentration of calcium carbonate in the original material. The pores through the sachet walls begin to block at pH 6.0 to 6.5 due to the formation of magnesium hydroxide gel which coats the interior surface of the sachet. Earlier blockage of the pores is resisted by the siliceous clays present in the original material which also tend to flocculate the solid residues in the sachet. Because of the fineness of the calcium hydroxide formed in the sachet, this may also act as a gelling agent.

The floating of the sachet due to the carbon dioxide inside is dependent on many factors including temperature, the downward force of water through the skimmer box, the volume of $CO_2$ produced and the blocking of the pores but we have found that generally by the time the sachet floats the level of chlorine concentration in the sachet is about 5%. Accordingly, the floating of the sachet indicates the usefulness of the package is almost past although usually the sachet will only be inspected daily at which time it is still afloat due to the retained $CO_2$ inside which has expanded when contacted by the increased temperatures at the surface of the water in the skimmer box.

Remaining chlorine which is in the sachet when it floats to the surface tends to diffuse through the sachet wall over a period of I hour or so.

In an embodiment in which carbonate is provided in the hypochlorite material but no gelling agent, more carbon dioxide will be desirable and the proportion of calcium carbonate may be as high as 5 wt %. Where the pores become blocked, this level may produce sufficient $CO_2$ to burst the sachet and concentrations of calcium carbonate as low as 0.2 to 0.3 wt % may be appropriate.

The broad range of solid residue from the hypochlorite material will usually be in the range of 3 to 300 microns with a peak proportion of the particles having a size of about 70 microns.

Generally about 75 wt % of the particles are larger than 70 microns and this ratio is approximately retained with or without the siliceous clay and magnesium oxide since the siliceous clay agglomerates the mid size particles but the magnesium and calcium hydroxide particles are usually less than 5 microns.

Theoretically the largest proportion of the particles will be retained if the pore size is 70 microns or less, but this assumes that all solid residue particles will pass through the pores if they are sufficiently small. This clearly is not the case because of the pressure drop through the sachet due to the porous wall or walls as well as other factors including surface tension. We have found that using the preferred pore size of 0.5 mm at a porosity of about 5% at least about 80% of the solid residue may be retained within the sachet and generally considerably more. The level of retention is increased using two layers in the porous wall or walls of the sachet because of the double pressure drop effect resulting in most particles which pass through the inner layer being deposited between the two layers. Retention may also be increased if only one wall is porous but this tends to reduce the rate of release of the chlorine since flow of water through the sachet is inhibited.

Solids retention is measured by releasing the residue onto weighed filter paper by running water through the opened sachet, drying the residue on the filter paper in an oven and weighing the dried residue on the filter paper. This figure is compared as a percentage with a maximum residue left by dissolving a sample of the same weight (83 g) of the hypochlorite material in a fixed volume of water, agitating the solution to aid dissolving, decanting the solution including the residue onto filter paper which has been preweighed and determining the weight of the residue as before. This is performed several times and an average figure taken. The temperature and pH of the water should be as close as possible to that of the body of water.

It will be appreciated by those skilled in the art that the aforementioned description of the preferred embodiment is given by way of example only and that many modifications and variations may be made thereto within the scope of the invention as defined in the accompanying claims.

Furthermore, it will be understood that the present invention may be adapted for use with other chlorine release materials which leave solid residues when dissolved in water. Examples of such other materials include porous carbon based materials in which chlorine ions are retained in the pores, and other calcium based chlorine release agents.

Still further, it will be understood that the inclusion of a carbon dioxide release agent in a chlorine release material in a sachet is appropriate to all types of chlorine release materials whether or not they leave a residue when dissolved in water, and the invention should be construed accordingly. The gelling and/or flocculating agent may also be included with such non-hypochlorite chlorine release agents.

**Claims**

1. A package for use in chlorinating a body of water comprising a substantially closed sachet having at least one wall which in use of the package is permeable to water and to chlorine, characterised in that a solid source of hypochlorite material is disposed in the sachet which dissolves in water to release chlorine and a solid residue, and in that the permeability of the at least one wall such as in use to retain more than 50 wt % of the solid residue in the sachet.

2. A package as claimed in claim 1 in which said at least one wall comprises two overlapping layers of water permeable material.

3. A package as claimed in claim 1 wherein said at least one wall has a porosity of from 1 to 10%.

4. A package as claimed in claim 1 wherein the or each layer of said at least one wall has a multitude of pores therethrough having a diameter in the range 1 to 1000 microns.

5. A package as claimed in claim 1 wherein the chlorinating material comprises calcium hypochlorite.

6. A package as claimed in claim 1 wherein the chlorinating material contains a carbonate which in acid medium releases carbon dioxide.

7. A package as claimed in claim 1 wherein the chlorinating material contains an ingredient which forms gelatinous precipitate in the aqueous medium formed in the sachet in use of the package.

8. A package as claimed in claim 1 wherein the chlorinating material contains a flocculating agent for agglomerating at least part of the solid residue formed in the sachet.

9. A package as claimed in claim 1 wherein the chlorinating material comprises calcium hypochlorite containing 0.1 to 5 wt % calcium carbonate, 0.5 to 3.5 wt % MgO and 1 to 10 wt % siliceous clay.

10. A method of chlorinating a body of water which is characterised by providing in a sachet a solid source of hypochlorite material which dissolves in water to release chlorine and a solid residue, disposing the sachet in an enclosure containing a constrained volume of water which is in communication with the body of water and with means for displacing the constrained volume into the body of water, the sachet in the constrained volume having at least one wall which is permeable to water and to chlorine with the permeability being such as to retain more than 50% of the solid residue in the sachet, and activating the displacing means.

FIG 1

FIG 2